# EUROPÄISCHE PATENTANMELDUNG

(11) **EP 0 751 246 A1**
(43) Veröffentlichungstag der Anmeldung: **02.01.1997**
(21) Anmeldenummer: 96110040.1
(22) Anmeldetag: 21.06.1996
(51) Int. Cl.: D03D 47/12, B29C 63/22

(54) **Zahnrad zum Antreiben eines Greiferbandes einer Webmaschine**

(30) Priorität: 27.06.1995 BE 9500572
(71) Anmelder: Picanol N.V., 8900 Ieper (BE)
(72) Erfinder: Adriaen, Marc, 8902 Hollebeke (BE)
(74) Vertreter: Wilhelm & Dauster Patentanwälte European Patent Attorneys

(57) **Zusammenfassung**

Ein Zahnrad (1) zum Antreiben eines Greiferbandes einer Webmaschine ist so gestaltet, daß es aus einem getrennt hergestellten Grundkörper (3, 5) aus Kunststoff besteht, an welchem ein die Außenverzahnung (2) bildendes Band (9) aus verschleißfestem Material mittels einer Klebstoffschicht (10) befestigt ist.

## Beschreibung

Die Erfindung betrifft ein Zahnrad zum Antreiben eines Greiferbandes einer Webmaschine mit einem Grundkörper aus Kunststoff, dessen Umfang mit einer Außenverzahnung aus einem verschleißfesten, bandförmigen Material versehen ist.

Es ist bekannt (US 4 564 053), ein mit Aussparungen versehenes Greiferband mittels eines Zahnrades anzutreiben, um einen am Ende des Greiferbandes angebrachten Greifer in ein Webfach hinein und wieder hinauszubewegen. Die Aussparungen des Greiferbandes arbeiten mit den Zähnen des Zahnrades zusammen. Da die Webgeschwindigkeit ständig erhöht wird, wird angestrebt, daß die Massenträgheit des Zahnrades so klein wie möglich ist. Da die mit den Aussparungen des Greiferbandes zusammenwirkenden Zähne des Zahnrades einem Verschleiß unterliegen, wird angestrebt, diese Zähne möglichst verschleißfest zu machen.

Um ein Zahnrad mit geringer Masse und damit geringer Massenträgheit zu erhalten, ist es durch den Stand der Technik bekannt, das Zahnrad aus Leichtmetall oder Kunststoff zu fertigen und gegebenenfalls zusätzlich mit Aussparungen zu versehen.

Ein Zahnrad aus Leichtmetall, beispielsweise Aluminium, weist bei einer geeigneten Behandlung der Zähne eine gute Verschleißfestigkeit auf. Die Masse und damit die Massenträgheit eines derartigen Zahnrades ist allerdings noch relativ hoch. Darüber hinaus sind die Fertigung und die Bearbeitung eines derartigen Zahnrades und insbesondere die Behandlung zur Erzielung verschleißfester Zähne zeitintensiv und mithin aufwendig.

Ein Zahnrad aus Kunststoff, beispielsweise aus einem faserverstärkten Polymer, besitzt eine relativ geringe Masse und damit Massenträgheit. Die Zähne weisen jedoch selbst bei faserverstärktem Kunststoff nur eine unbefriedigende Verschleißfestigkeit auf.

Bei Zahnrädern der eingangs genannten Art (US 4 696 200, EP-A 504 803) ist es bekannt, einen Grundkörper aus Kunststoff vorzusehen, dessen Umfang mit einer Außenverzahnung aus einem verschleißfesten, bandförmigen Material versehen ist. Das bandförmige Material wird in eine Gießform eingelegt, in die dann der Kunststoff eingegossen oder eingespritzt wird, so daß der Grundkörper an das bandförmige Material angeformt wird. Derartige Zahnräder weisen in der Regel jedoch Formfehler auf, die vor allem auf das Gießen oder Spritzen des Kunststoffes in die Gießform zurückzuführen sind.

Der Erfindung liegt die Aufgabe zugrunde, ein Zahnrad der eingangs genannten Art zu schaffen, das möglichst keine durch Gießen oder Spritzen des Kunststoffgrundkörpers bedingte Formfehler aufweist.

Diese Aufgabe wird dadurch gelöst, daß an dem Umfang des getrennt hergestellten Grundkörpers ein die Außenverzahnung bildendes Band mittels eines Klebemittels befestigt ist.

Die Erfindung bietet den Vorteil, daß Formfehler des gegossenen oder gespritzten Grundkörpers aus Kunststoff keinen Einfluß auf die Gestalt der Verzahnung des Zahnrades haben. Durch das Kleben des Bandes auf den Grundkörper ergibt sich ein Zahnrad mit nur gering verformbarer Verzahnung.

In Ausgestaltung der Erfindung wird vorgesehen, daß der Umfang des Grundkörpers mit einer Verzahnung versehen ist, deren Zähne mit dem Band wenigstens im Bereich ihrer Zahnbrust und ihres Zahnrückens abgedeckt sind. Dadurch wird das Verkleben des Bandes mit dem Grundkörper vereinfacht.

In weiterer Ausgestaltung der Erfindung wird vorgesehen, daß zwischen der Innenkontur des Bandes und der Außenkontur der Außenverzahnung des Grundkörpers eine Klebstoffschicht vorhanden ist. Mit Hilfe dieser Klebstoffschicht, die einen Spalt zwischen dem Grundkörper und dem Band ausfüllt, lassen sich mögliche Formfehler des Grundkörpers ausgleichen.

In weiterer Ausgestaltung der Erfindung wird vorgesehen, daß die Zähne des Bandes im Bereich zwischen Zahnbrust und Zahnrücken ausgespart sind. Dadurch läßt sich die Masse und die Massenträgheit des Zahnrades verringern.

In weiterer Ausgestaltung der Erfindung wird vorgesehen, daß die Zähne der Verzahnung des Grundkörpers zwischen ihrer Zahnbrust und ihrem Zahnrücken mit Aussparungen versehen sind, in die Teile des Bandes hineingreifen. Damit läßt sich ebenfalls die Massenträgheit des Zahnrades verringern.

In weiterer Ausgestaltung der Erfindung wird vorgesehen, daß die Außenseite des Bandes insbesondere im Bereich der Zahnbrust und des Zahnrückens der Zähne mit einer Gleitschicht versehen ist. Als Gleitschicht kann beispielsweise Teflon durch Spritzlackieren aufgebracht werden. Dadurch kann die Verschleißfestigkeit der Verzahnung erhöht werden.

Weitere Vorteile und Merkmale der Erfindung ergeben sich aus der nachfolgenden Beschreibung der in der Zeichnung dargestellten Ausführungsbeispiele.
- Fig. 1: zeigt eine Stirnansicht eines erfindungsgemäßen Zahnrads,
- Fig. 2: den Ausschnitt F2 in der Fig. 1 in vergrößertem Maßstab,
- Fig. 3: einen Schnitt entlang der Linie III-III der Fig. 2 mit einem von dem Zahnrad anzutreibenden Greiferband und
- Fig. 4 bis 7: Ausführungsbeispiele von die Außenverzahnung eines Zahnrades bildenden Bändern.

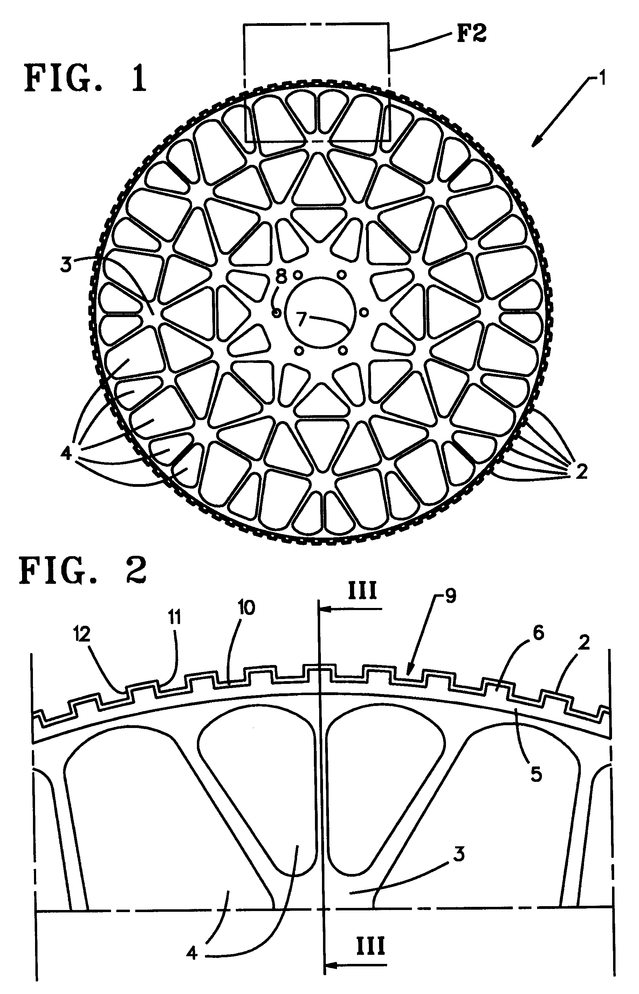

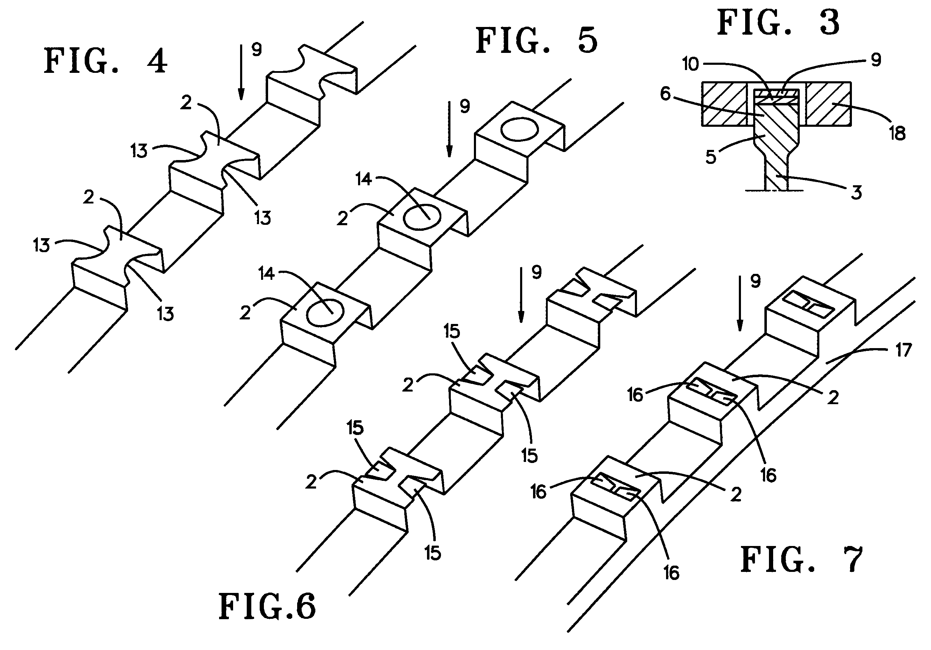

Das in Fig. 1 bis 3 dargestellte Zahnrad dient zum Antrieb eines Greiferbandes (18) einer Webmaschine (Fig. 3). Das Zahnrad besitzt einen einteilig aus Kunststoff hergestellten Grundkörper, der eine Habe mit einer zentralen Bohrung (7) aufweist, die eine nicht dargestellte Antriebswelle aufnimmt. Im Bereich der Habe sind Bohrungen (8) für Schrauben vorgesehen, mit denen das Zahnrad (1) an der Antriebswelle befestigbar ist. Die Nabe ist mittels einer mit Aussparungen (4) versehenen Scheibe (3) mit einem Radkranz (5) verbunden. Die Scheibe (3) besitzt eine geringere axiale Breite als der Radkranz (5). Der Randkranz (5) ist an seinem Umfang mit einer Verzahnung mit Zähnen (6) versehen.

Der Grundkörper wird aus Kunststoff in einer Gießform hergestellt, insbesondere durch Gießen oder Druckspritzen. Als Kunststoff wird ein faserverstärktes Polymer verwendet. Als Verstärkungsfasern dienen beispielsweise Kohlenstoffasern.

Das Zahnrad (1) ist mit einem Band (9) aus einem verschleißfesten Material versehen, das eine Außenverzahnung mit Zähnen (2) bildet, die mit dem Greiferband (18) zusammenwirken. Das Band (9) überdeckt dabei den Grundkörper derart, daß es den Radkranz (5) im Bereich der Zähne (6) weitgehend abdeckt. Der Radkranz (5) und das Band (9) sind miteinander verklebt.

Die Zähne (2) der Außenverzahnung des Bandes (9) überdecken die Zähne (6) der Verzahnung des Radkranzes (5) des Grundkörpers weitgehend, so daß die Aussparungen des Greiferbandes (18) nur mit den Zähnen (2) des Bandes (9) zusammenarbeiten, die eine relativ hohe Verschleißfestigkeit aufweisen.

Das Band (9) besteht aus einem verschleißfesten Material, beispielsweise einem geeigneten verschleißfesten Metall oder laminierten, verschleißfesten Fasern, beispielsweise Keflarfasern. Um die Verschleißfestigkeit des Bereiches des Bandes (9), der mit dem Greiferband (18) zusammenwirkt, noch weiter zu erhöhen, kann wenigstens dieser Bereich der Außenverzahnung des Bandes (9) mit einer Gleitschicht versehen sein. Beispielsweise kann eine Teflonschicht insbesondere durch Spritzlackieren aufgebracht werden.

Zwischen der Innenkontur des Bandes (9) und der Außenkontur des Radkranzes (5) ist eine Klebstoffschicht von beispielsweise 0,2 mm bis 2 mm Dicke vorgesehen. Diese Klebstoffschicht (10) ermöglicht es, daß selbst dann, wenn die Zähne (6) des Radkranzes (5) nicht exakt geformt sind, die Zähne (2) der Außenverzahnung des Bandes ihre exakte Form nicht verändern müssen. Dies ist dadurch möglich, daß die Dicke der Klebstoffschicht (10) über den Umfang des Radkranzes (5) ohne weiteres unterschiedlich groß sein kann, so daß Formfehler des gegossenen oder gespritzten Grundkörpers ohne weiteres ausgeglichen werden können. Dies führt zu dem Vorteil, daß der gespritzte oder gegossene Grundkörper vor dem Anbringen des Bandes nicht oder wenigstens nicht exakt bearbeitet werden muß.

Die Zähne (2) des an den Grundkörper angeklebten Bandes weisen eine hohe Steifigkeit auf, die weitgehend unabhängig von der Verformbarkeit des Bandes vor dem Aufkleben ist. Durch Verwendung eines Klebemittels mit hoher Festigkeit, insbesondere eines aushärtenden Mehrkomponentenklebers kann diese Steifigkeit noch erhöht werden.

Da nur die Zahnbrust (11) und der Zahnrücken (12) der Zähne für den Antrieb eines Greiferbandes (18) wesentlich sind, müssen nur diese Zahnbrust (11) und dieser Zahnrücken (12) aus dem verschleißfesten Material des Bandes gefertigt sein.

Die Massenträgheit eines Zahnrades (1) wird wesentlich durch die Massen der im Bereich der größten Durchmesser oder Radien befindlichen Teile bestimmt. Es ist deshalb vorteilhaft, die Masse des Bandes und damit die Massenträgheit niedrig zu halten. Zu diesem Zweck kann an der Oberseite der im wesentlichen rechteckigen Zähne des Bandes Material entfernt werden. Bei dem Ausführungsbeispiel nach Fig. 4 sind im Bereich der Oberseiten der Zähne seitliche Aussparungen (13) und bei dem Ausführungsbeispiel nach Fig. 5 mittlere Aussparungen (14) vorgesehen.

Bei dem Ausführungsbeispiel nach Fig. 6 sind in den Oberseiten der Zähne (2) nach innen abgebogene Laschen (15) vorgesehen, die in Aussparungen der nicht dargestellten Zähne (6) des Radkranzes (5) eingreifen. Dadurch kann die Massenträgheit des Zahnrades etwas verringert werden, ohne daß dadurch die Klebefläche zwischen dem Band (9) und dem Grundkörper verringert wird.

Bei der Ausführungsform nach Fig. 7 ist vorgesehen, daß das Band (9) Seitenwände (17) aufweist und somit auch die Seitenränder der Zähne (6) und des Radkranzes (5) überdeckt, wobei die Zähne (6) kappenartig umhüllt werden. Im Bereich der Oberseite der nicht dargestellten Zähne (6) des Grundkörpers sind Aussparungen vorgesehen, in die nach innen abgewinkelte Laschen (16) des Bandes (9) eingreifen.

Bei allen Ausführungsbeispielen können noch zusätzliche Befestigungsmittel vorgesehen werden, um das Band (9) an dem Grundkörper zu halten. Dies ist insbesondere dann vorteilhaft, wenn ein über eine längere Zeit aushärtendes Klebemittel verwendet wird.

Das Zahnrad (1) muß nicht über seinen gesamten Umfang mit einer Außenverzahnung aus Zähnen (2) versehen sein, sondern nur in dem Bereich seines Umfangs, der mit einem Greiferband (18) zusammenarbeitet. Für den Fall, daß ein Greiferband nur über einen Teil des Umfanges mit einem Zahnrad zusammenarbeitet, kann anstelle eines kreisrunden Zahnrades auch ein Zahnrad in Form eines Kreissegmentes vorgesehen werden.

## Patentansprüche

1. Zahnrad (1) zum Antreiben eines Greiferbandes (18) einer Webmaschine mit einem Grundkörper (3, 5) aus Kunststoff, dessen Umfang mit einer Außenverzahnung aus verschleißfestem, bandförmigem Material versehen ist, dadurch gekennzeichnet, daß an dem Umfang des getrennt hergestellten Grundkörpers ein die Außenverzahnung (2) bildendes Band (9) mittels eines Klebemittels (10) befestigt ist.

2. Zahnrad (1) nach Anspruch 1, dadurch gekennzeichnet, daß der Umfang des Grundkörpers mit einer Verzahnung versehen ist, deren Zähne (6) mit dem Band (9) wenigstens im Bereich ihrer Zahnbrust und ihres Zahnrückens abgedeckt sind.

3. Zahnrad (1) nach Anspruch 1 oder 2, dadurch gekennzeichnet, daß zwischen der Innenkontur des Bandes (9) und der Außenkontur des Grundkörpers eine Klebstoffschicht (10) vorhanden ist.

4. Zahnrad (1) nach einem der Ansprüche 1 bis 3, dadurch gekennzeichnet, daß die Zähne (2) des Bandes (9) im Bereich zwischen Zahnbrust (11) und Zahnrücken (12) ausgespart sind.

5. Zahnrad (1) nach einem der Ansprüche 1 bis 3, dadurch gekennzeichnet, daß die Zähne (6) der Verzahnung des Grundkörpers zwischen ihrer Zahnbrust und ihrem Zahnrücken mit Aussparungen versehen sind, in die Teile (15, 16) des Bandes (9) hineingreifen.

6. Zahnrad (1) nach einem der Ansprüche 1 bis 5, dadurch gekennzeichnet, daß die Zähne (2) des Bandes (9) die Zähne (6) der Verzahnung des Grundkörpers kappenartig umhüllen.

7. Zahnrad (1) nach einem der Ansprüche 1 bis 6, dadurch gekennzeichnet, daß die Außenseite des Bandes (9) wenigstens im Bereich von Zahnbrust (11) und Zahnrücken (12) mit einer Gleitschicht versehen ist.

8. Zahnrad (1) nach einem der Ansprüche 1 bis 7, dadurch gekennzeichnet, daß der Grundkörper (3, 5) aus einem faserverstärktem Polymer hergestellt ist.

9. Zahnrad (1) nach einem der Ansprüche 1 bis 8, dadurch gekennzeichnet, daß das Band (9) aus Metall hergestellt ist.

10. Zahnrad (1) nach einem der Ansprüche 1 bis 8, dadurch gekennzeichnet, daß das Band (9) aus laminiertem Fasermaterial hergestellt ist.
